# EUROPEAN PATENT APPLICATION

(11) **EP 2 190 050 A1**
(43) Date of publication of application: **26.05.2010**
(21) Application number: 08790369.6
(22) Date of filing: 05.08.2008
(51) Int. Cl.: H01M 8/04, H01M 8/10

(54) **FUEL SUPPLY ADAPTER DEVICE AND FUEL SUPPLY DEVICE**

(30) Priority: 11.09.2007 JP 2007234939
(71) Applicant: Panasonic Corporation, Kadoma-shi Osaka 571-8501 (JP)
(72) Inventor: KOZU, Katsumi, Chuo-ku Osaka-shi Osaka 540-6207 (JP); HIRAKAWA Yasushi c/o Panasonic Corporation, Chuo-ku Osaka-shi Osaka. (JP); FUKUMASA Takeshi c/o Panasonic Corporation, Chuo-ku Osaka-shi Osaka (JP)
(74) Representative: Schwabe - Sandmair - Marx
(86) International application number: PCT/JP2008/002105
(87) International publication number: WO 2009/034676

(57) **Abstract**

It is a fuel supply adaptor device which connects the apparatus having a fuel injecting portion including a power generator formed of fuel cells to the fuel cartridge having a fuel supplying portion and delivers the fuel in the fuel cartridge to the power generator, comprising a second connector for making connection to the fuel injecting portion of at least one apparatus, a first connector for making connection to the fuel supplying portion of at least one fuel cartridge, a connecting pipe for connecting the first connector to the second connector, and a holder, wherein the first connector, the second connector, and the connecting pipe are held by the holder.

## Description

### TECHNICAL FIELD

The present invention relates to a fuel supply adaptor device for supplying fuel in a fuel cartridge to a power generator by connecting a fuel cartridge to an apparatus including a power generator formed of fuel cells.

### BACKGROUND ART

Recently, electronic apparatuses are rapidly becoming more and more portable and cordless, and as a driving source for these, there is an increasing demand for secondary cells being small-sized, light-weight, and having high energy density. Further, fuel cells which can be continuously used for a longer period of time through fuel supply as compared with secondary cells necessary to be charged are attracting special attention.

As a small-sized fuel cell to be mounted in a small-sized portable electronic apparatus, such a type of fuel cell using liquid fuel such as methanol, methanol aqueous solution or formic acid aqueous solution is spotlighted. Such fuel is harmful to human body. Therefore, now examined is a supplying method such that the fuel is filled into a fuel cartridge, and a connector of the fuel cartridge is directly connected to a connector at the electronic apparatus side mounted with a fuel cell, thereby enabling injection of the fuel into the electronic apparatus without fuel leakage. Further, developments are directed toward providing a connector having a shape designed to prevent fuel leakage even when forces are accidentally applied to the connector in making connection between connectors or in fuel supplying (for example, see Patent document 1).

On the other hand, as for a fuel cartridge, although it has a connector same in shape as that or the electronic apparatus, various types of fuel cartridges are available ranging from small size and capacity types attaching great importance to portability to large size and capacity types attaching great importance to inexpensiveness and versatility.

However, electronic apparatuses mounted with fuel cells are increasingly reduced in size as is represented by portable telephones, and as a result, the connectors are also increasingly reduced in size. Accordingly, the connectors of fuel cartridges and connectors of electronic apparatuses are further lowered in mechanical strength, becoming easier to be damaged. Particularly, connections between small-sized electronic apparatus and inexpensive large-capacity type fuel cartridge are liable to become defective, and it is required to use a small size and capacity type fuel cartridge. Thus, there are problems to be solved for the user with respect to convenience and increase in running cost.

Also, in electronic apparatuses different in shape, connectors are also generally different in shape every electronic apparatus, and even in the case of using same fuel, there is a problem such that it is necessary to individually use fuel cartridges different in shape of connectors corresponding thereto.

Patent document 1 Unexamined Japanese Patent Publication 2007-128850.

### SUMMARY OF THE INVENTION

The fuel supply adaptor device of the present invention is a fuel supply adaptor device for supplying fuel in a fuel cartridge to a power generator, connecting an apparatus having a fuel injecting portion including at least a part of the power generator formed of fuel cells to a fuel cartridge having a fuel supplying portion, which comprise a first connector for making connection to the fuel injecting portion of at least one apparatus, a second connector for making connection to the fuel supplying portion of at least one fuel cartridge, a connecting pipe for making connection between the first connector and the second connector, and a holder, and is configured in that the first connector, second connector, and connecting pipe are held by the holder.

In this configuration, even in case the fuel supplying portion of fuel cartridge and fuel injecting portion of the apparatus are different in shape, the fuel can be injected from various types of fuel cartridges to various types of apparatuses, greatly improving the convenience. Also, since it is not necessary to directly connect the fuel supplying portion of fuel cartridge to the fuel injecting portion of the apparatus, it is possible to prevent occurrence of damage in making connection and damage in the course of fuel injection.

Also, the fuel supply device of the present invention is configured in that the holder of the fuel supply adaptor device is provided with a cartridge holder for holding the fuel cartridge and an apparatus holder for holding the apparatus. In this way, it is possible to realize a small-sized and highly reliable fuel supply device, integrating the apparatus and fuel cartridge.

### BRIEF DESCRIPTION OF DRAWINGS

Fig. 1 is a schematic perspective plan view for describing the structure of a fuel supply adaptor device in the first embodiment of the present invention.
Fig. 2A is a schematic top view of a fuel supplying portion of a fuel cartridge in the first embodiment of the present invention.
Fig. 2B is a sectional view along the line 2B - 2B of Fig. 2A.
Fig. 2C is a schematic top view of a first connector of the fuel supply adaptor device in the first embodiment of the present invention.
Fig. 2D is a sectional view along the line 2D - 2D of Fig. 2C.
Fig. 3 is a schematic perspective plan view for describing the structure of a fuel supply adaptor device in the second embodiment of the present invention.
Fig. 4 is a schematic perspective plan view for describing another example of structure of the fuel supply adaptor device in the first embodiment or the second embodiment of the present invention.
Fig. 5 is a schematic perspective plan view for describing the structure of a fuel supply adaptor device in the third embodiment of the present invention.
Fig. 6 is a schematic perspective plan view for describing the structure of a fuel supply adaptor device in the fourth embodiment of the present invention.
Fig. 7A is a schematic perspective plan view for describing the structure of a fuel supply adaptor device in the fifth embodiment of the present invention.
Fig. 7B is a side view in one longitudinal direction of Fig. 7A.
Fig. 7C is a side view on the other longitudinal direction of Fig. 7A.
Fig. 8 is a schematic perspective plan view for describing the structure of a fuel supply device in the sixth embodiment of the present invention.
Fig. 9 is s schematic perspective plan view for describing another example of structure of the fuel supply device in the sixth embodiment of the present invention.

### DETAILED DESCREPTION OF PREFFERED EMBODIMENTS

The preferred embodiments of the present invention will be described in the following with reference to the drawings. The present invention is not limited to the following contents provided that it is based on the basic feature mentioned in this specification.

### FIRST EMBODIMENT

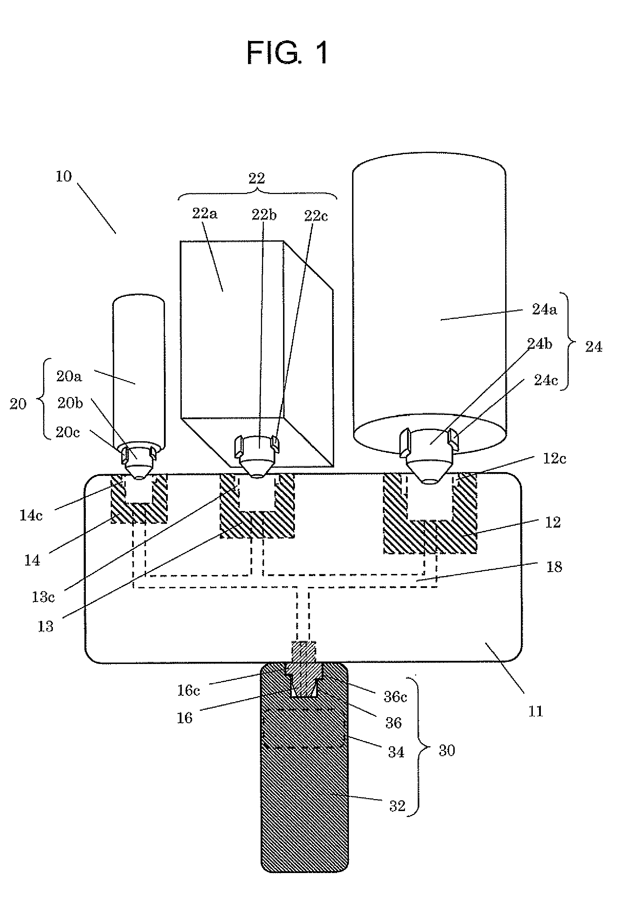

Fig. 1 is a schematic perspective plan view for describing the structure of a fuel supply adaptor device in the first embodiment of the present invention. Shown in Fig. 1 is an example of connection via fuel supply adaptor device 10 between a plurality of different shapes of fuel cartridges 20, 22, 24 to be installed in fuel supply adaptor device 10 and for example apparatus 30 such as a portable telephone. Also, in Fig. 1, a perspective view is shown in order to make clear the shapes of fuel cartridges 20, 22, 24. Here, fuel cartridge 20 is for example a pencil-like cartridge of small size and capacity type, and fuel cartridge 22 is for example a square medium size and capacity type. Or, fuel cartridge 24 is for example a cylindrical cartridge of large size and capacity type. Shown above is an example, and as for fuel cartridges having same fuel supplying portion, about 10 shapes such as cylindrical and square types are now proposed.

As shown in Fig. 1, fuel supply adaptor device 10 in the first embodiment of the present invention includes a plurality of first connectors 12, 13, 14, second connector 16, and connecting pipe 18 for connecting the first connectors to the second connector, which are integrally built in holder 11.

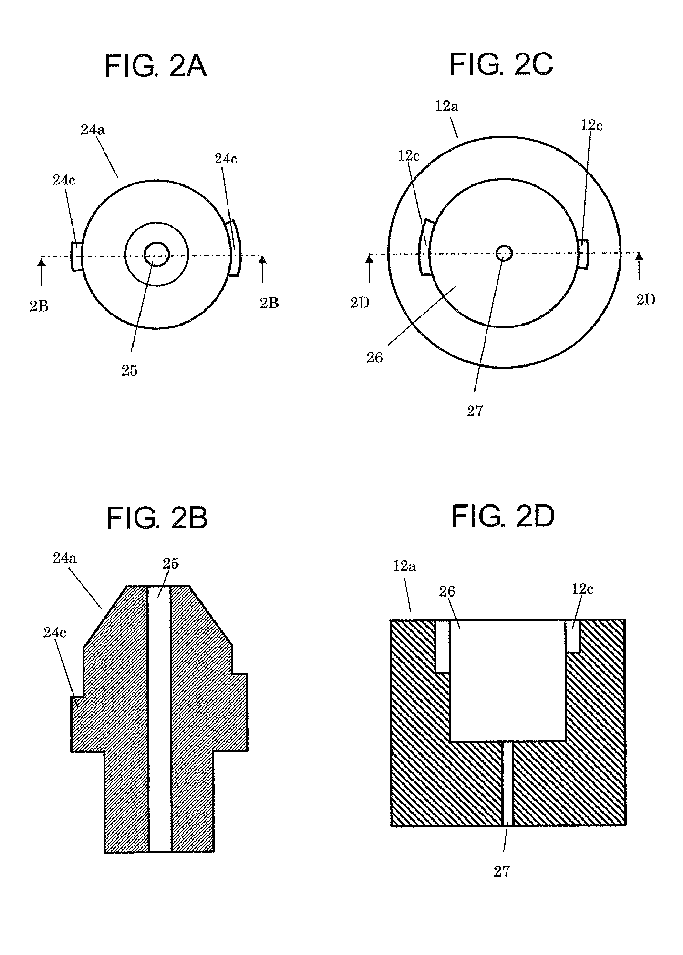

Also, fuel cartridges 20, 22, 24 comprise fuel cartridge main bodies 20a, 22a, 24a, and fuel supplying portions 20b, 22b, 24b. In this case, first connectors 12, 13, 14 have shapes corresponding to fuel supplying portions 20b, 22b, 24b of fuel cartridges 20, 22, 24 having different shapes. In the present preferred embodiment, as described in detail in the following by using Fig. 2A to Fig. 2D, the fuel supplying portion of the fuel cartridge and the first connector of fuel supply adaptor device 10, and a mechanical key formed of a pair of projection and depression having exclusive shapes corresponding to each of them are disposed as shown in the example.

Further, apparatus 30 comprises apparatus main body 32 provided with power generator 34 formed of fuel cells, and fuel injecting portion 36 connected to second connector 16 of fuel supply adaptor device 10. Here, power generator 34 includes at least a fuel cell and a tank for storing fuel of the fuel cell. The inside detailed structures of fuel cartridge 20 and apparatus 30 are omitted.

As a method of integrating a plurality of first connectors 12, 13, 14, second connector 16, and connecting pipe 18 for connecting the first connectors to the second connector by using holder 11, for example, it is allowable to employ a method of molding with resin, and also, a method of forming a remodeling preventive portion by welding and bonding. In this way, it is possible to prevent the fuel supply adaptor device from being remodeled and to avoid supplying a different type of fuel to the apparatus.

In the above configuration, the fuel is delivered to connecting pipe 18 from fuel supplying portion 24b of fuel cartridge 24, for example, which is fitted to first connector 12 of fuel supply adaptor device 10, and the predetermined fuel is fed to apparatus 30 from fuel injecting portion 36 of apparatus 30 connected to second connector 16 of fuel supply adaptor device 10. In this case, fuel cartridge 24 is allowable to be a non-pressure type which externally pressurizes and delivers the fuel or a pressure type with its internal pressure set at a high degree which delivers the fuel by using the internal pressure. For example, in the case of a non-pressure type, the fuel can be fed by pressing fuel cartridge main body 24a installed in fuel supply adaptor device 10. Similarly, in the case of using other fuel cartridge, it is allowable to deliver the fuel by connecting all the fuel cartridges corresponding to all of the first connectors.

In this case, the fuel is supposed to be a liquid fuel such as methanol or its aqueous solution, and formic acid.

Also, first connector 12, second connector 16, holder 11, and connecting pipe 18 are for example formed from resin material having ethanol resistive property such as polyethylene (PE), polypropylene (PP), polyethyl ether ketone (PEEK), polyphenylene sulfide (PPS), super engineer plastic such as liquid crystal polymer, polyethylene terephthalate (PET), polybutylene terephthalate (PBT), and polyacetal (POM). Particularly, first connector 12, second connector 16, and connecting pipe 18 are preferable to be formed from material free from elution of residue or metallic cation from the base material due to coming in contact with the fuel.

An example of mechanical key is described in detail in the following by using Fig. 2A to Fig. 2D.

Fig. 2A is a schematic top view of fuel supplying portion 24b of fuel cartridge 24 in the first embodiment of the present invention. Fig. 2B is a sectional view along the line 2B - 2B of Fig. 2A. Also, Fig. 2C is a schematic top view of first connector 12 of fuel supply adaptor device 10 in the first embodiment of the present invention, and Fig. 2D is a sectional view along the line 2D - 2D of Fig. 2C. In Fig. 2A to Fig. 2D, fuel supplying portion 24b of fuel cartridge 24 and first connector 12 are described as an example, but as shown in Fig. 1, same holds true with respect to the relationship between projection 20c, 22c of fuel supplying portion 20b, 22b of other fuel cartridge 20, 22 and depression 13c, 14c of first connector 13, 14. Further, same holds true with respect to the relationship between projection 16c of second connector 16 and depression 36c of fuel injecting portion 36 of apparatus 30.

As shown in Fig. 2A and Fig. 2B, through-hole 25 for the fuel to pass through is disposed at the center of fuel supplying portion 24b, and there are provided two projections 24c at the outer periphery. Also, as shown in Fig. 2C and Fig. 2D, in the central portion of first connector 12 are disposed space 26 for accommodating fuel supplying portion 24b of the fuel cartridge, and through-hole 27 for the fuel to pass through which is connected thereto. Also, depression 12c is disposed in the position corresponding to projection 24c, leading to the outside of space 26. And, with projection 24c engaged to depression 12c, it enables fuel supplying portion 24b and first connector 12 to engage each other. That is, a pair of mechanical keys having exclusive shapes capable of engaging each other are formed by projection 24c of fuel supplying portion 24b and depression 12c of first connector 12. The shape of mechanical key is not limited to this, but it is optional provided that it is a pair of shapes that may engage each other. In this way, it is possible for example to prevent different types of fuel cartridge not suited for the apparatus from being connected to the apparatus or the second connector of the fuel supply adaptor device. Here, the types of fuel cartridges are related to factors such as the kind of fuel, concentration, and internal pressure for fuel delivery.

According to the present preferred embodiment, the fuel can be fed to the apparatus with a plurality of fuel cartridges different in shape and capacity simultaneously installed in the fuel supply adaptor device, and therefore, it is possible to improve the convenience and to reduce the fuel running cost. Also, for example, it is possible to avoid forced connection due to accidental forces or the like that is liable to take place when the fuel supplying portion of a large capacity fuel cartridge is directly connected to the apparatus, and to prevent the occurrence of damage or leakage trouble.

Also, according to the present preferred embodiment, due to the mechanical key disposed, it is possible to reliably prevent the performance of fuel cells in the power generator from lowering or becoming defective that is liable to take place when the fuel used is not suited for the power generator of the apparatus.

In the preferred embodiment, the power generator of the apparatus is built in the apparatus, as an example in the description, but it is not limited to this configuration. For example, it is allowable to install the power generator separate from the apparatus and to use it with the apparatus main body of the apparatus. Also, it is allowable to install only the tank or fuel cell separate from the apparatus. That is, it is just enough for the apparatus to comprise at least a part of the power generator formed of fuel cells.

Also, in the preferred embodiment, three types of the fuel supplying portions of fuel cartridges and the first connectors are different in shape, as an example in the above description, but the configuration is not limited to this, and the shapes are allowable to be identical.

Further, in the preferred embodiment, the fuel supplying portions of all fuel cartridges and the fuel injecting portions of the apparatus are different in shape, as an example in the above description, but the configuration is not limited to this. For example, at least one fuel supplying portion and one fuel injecting portion are preferable to be shaped so as to be capable of engaging each other. In this way, since the fuel supplying portion and fuel injecting portion being same in shape are able to engage each other, it is possible to make direct connection or connection via the fuel supply adaptor device.

### Second embodiment

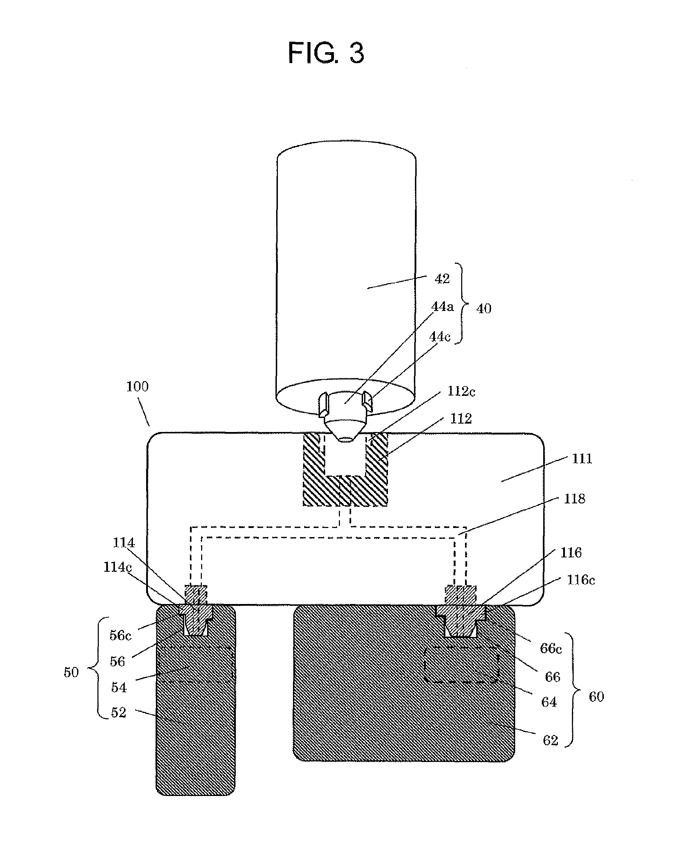

Fig. 3 is a schematic perspective plan view for describing the structure of the fuel supply adaptor device in the second embodiment of the present invention. Shown in Fig. 3 is an example of connecting fuel cartridge 40 installed in fuel supply adaptor device 100 to a plurality of apparatuses comprising first apparatus 50 such as portable telephone and second apparatus 60 such as PDA for example via fuel supply adaptor device 100. Also, in Fig. 3, a perspective view is shown in order to make clear the shape of fuel cartridge 40. The apparatus is an example, and it is allowable to be a portable electronic apparatus or an installation type electronic apparatus.

As shown in Fig. 3, fuel supply adaptor device 100 in the second preferred embodiment of the present invention includes first connector 112, a plurality of second connectors 114, 116, and connecting pipe 118 for connecting the first connector to the second connectors, which are integrally built in holder 111.

Here, fuel cartridge 40 is formed of fuel cartridge main body 42 and fuel supplying portion 44a. In this case, first connector 112 has a shape corresponding to fuel supplying portion 44a of fuel cartridge 40.

Same as in the first embodiment, the fuel supplying portion of fuel cartridge and first connector 112 of fuel supply adaptor device 100. Projection, 44 of the fuel supplying portion of fuel cartridge and depression 112c of the first connector 112 of fuel supply adaptor device 100 have particular shapes, and correspond to each other as shown in the example. Similarly, second connectors 114, 116 of first apparatus 50, second apparatus 60, and fuel supply adaptor device 100 are also provided with a mechanical key formed of a pair of projections 114c, 116c, and depressions 56c, 66c having exclusive shapes corresponding to each of them.

Also, first apparatus 50 comprises first apparatus main body 52 provided with power generator 54 formed of fuel cells, and fuel supplying portion 56 connected to second connector 114 of fuel supply adaptor device 100. Similarly, second apparatus 60 comprises second apparatus main body 62 provided with power generator 64 formed of fuel cells, and fuel injecting portion 66 connected to second connector 116 of fuel supply adaptor device 100. Here, power generator 54, 64 includes at least a fuel cell and a tank for storing the fuel of the fuel cell. The detailed inside structures of fuel cartridge 40, first apparatus 50, and second apparatus 60 are omitted.

Further, as a method of integrating first connector 112, second connectors 114, 116, and connecting pipe 118 for connecting the first connector to the second connectors by means of holder 111, same as in the first embodiment, it is allowable to employ a method of molding with resin for example, and also allowable to dispose a remodeling preventive portion by welding and bonding. In this way, it is possible to prevent the fuel supply adaptor device from being remodeled and to avoid supplying a different type of fuel to the apparatus.

In the above configuration, the fuel is delivered to connecting pipe 118 from fuel supplying portion 44a of fuel cartridge 40 which is fitted to first connector 112 of fuel supply adaptor device 100, and the predetermined fuel is fed to first apparatus 50 and second apparatus 60 from fuel injecting portion 56 of first apparatus 50 and fuel injecting portion 66 of second apparatus 60 which are connected to second connectors 114, 116 of fuel supply adaptor device 100. In this case, fuel cartridge 40 is allowable to be a non-pressure type which externally pressurizes and delivers the fuel or a pressure type with its internal pressure set at a high degree which delivers the fuel by using the internal pressure. For example, in the case of a non-pressure type, the fuel can be fed by pressing fuel cartridge main body 42 installed in fuel supply adaptor device 100.
Here, the fuel is supposed to be a liquid fuel such as methanol or its aqueous solution, and formic acid the same as in the first embodiment. Also, first connector 112, second connector 114, 116, holder 111, and connecting pipe 118 are formed from, for example, resin material such as polyethylene (PE) having ethanol resistive property, polypropylene (PP), polyethyl ether ketone (PEEK), polyphenylene sulfide (PPS), super engineer plastic such as liquid crystal polymer, polyethylene terephthalate (PET), polybutylene terephthalate (PBT), and polyacetal (POM). Particularly, first connector 112, second connector 114, 116, and connecting pipe 18 are preferable to be formed from material that is free from elution of residue or metallic cation from the base material due to coming in contact with the fuel.

As for the mechanical key, the description is omitted because it is same as the content described by using Fig. 2A to Fig. 2D in the first embodiment.

According to the present preferred embodiment, the fuel can be fed to a plurality of apparatuses operated with same fuel from one fuel cartridge installed in the fuel supply adaptor device, and therefore, it is possible to improve the convenience and workability. Also, for example, it is possible to avoid forced connection due to accidental forces or the like that is liable to take place when the fuel supplying portion of a large capacity fuel cartridge is directly connected to the small apparatus (first apparatus for example), and to prevent damage of connections or leakage trouble.

In the preferred embodiment, the power generator of the apparatus is built in the apparatus, as an example in the above description, but it is not limited to this configuration. For example, it is allowable to install the power generator separate from the apparatus and to combine it with the apparatus main body of the apparatus. Also, it is allowable to install only the tank or fuel cell separate from the apparatus. That is, it is just enough for the apparatus to comprise at least a part of the power generator formed of fuel cells.

Also, in the preferred embodiment, two types of examples are described with respect to different shapes of the fuel injecting portion and second connector of the first apparatus and the second apparatus, but the configuration is not limited to this, and the shapes are allowable to be identical, and further, it is allowable to dispose a plurality of second connectors.

Also in the preferred embodiment, the fuel supplying portion of the fuel cartridge and the fuel injecting portion of each apparatus are different in shape, as an example in the above description, but the configuration is not limited to this. For example, at least one fuel supplying portion and one fuel injecting portion are preferable to have shapes that may engage each other. In this way, the fuel supplying portion and fuel injecting portion same in shape are able to engage each other, and can be directly connected or via the fuel supply adaptor device.

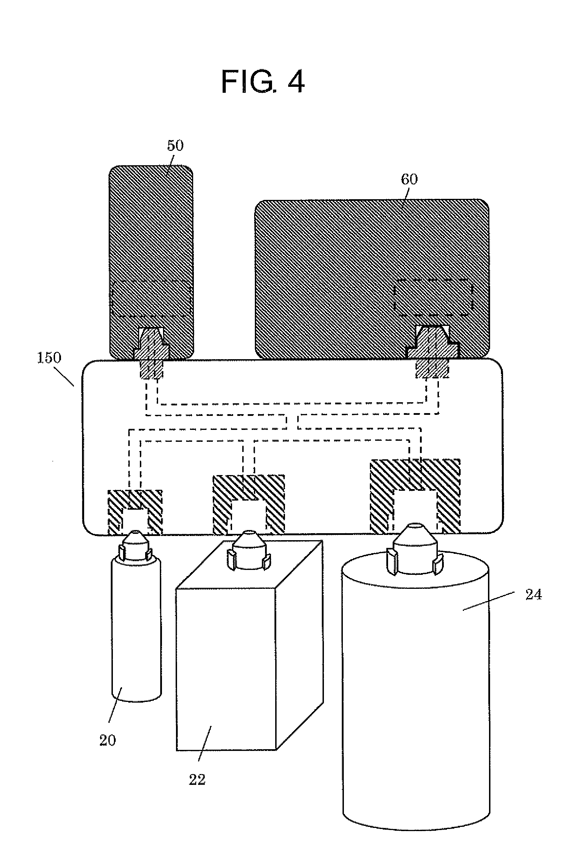

In the first embodiment and second embodiment, an example of supplying the fuel from a plurality of fuel cartridges to one apparatus or an example of supplying the fuel from one fuel cartridge to a plurality of apparatuses is described, but the configuration is not limited to this. For example, as shown in Fig. 4, it is allowable to configure fuel supply adaptor device 150 connected to a plurality of fuel cartridges 20, 22, 24, and a plurality of apparatuses such as first apparatus 50 and second apparatus 60. In this way, it is possible to further improve the convenience and to lower the running cost.

Also, in the first embodiment and second embodiment, the first connector and the second connector of the fuel supply adaptor device are provided with a valve mechanism which opens and closes when connected to a fuel cartridge or apparatus as assumed in the description. However, in case of no valve mechanism, it is preferable to be configured in that the connecting pipe to which each fuel cartridge is individually connected is provided with a one-way valve. In this case, it is necessary to provide at least the second connector connected to the apparatus with a valve mechanism in order to prevent leakage trouble. Thus, it is possible to simplify the first connector mechanism and to prevent back flowing of the fuel due to the simplified structure.

### Third embodiment

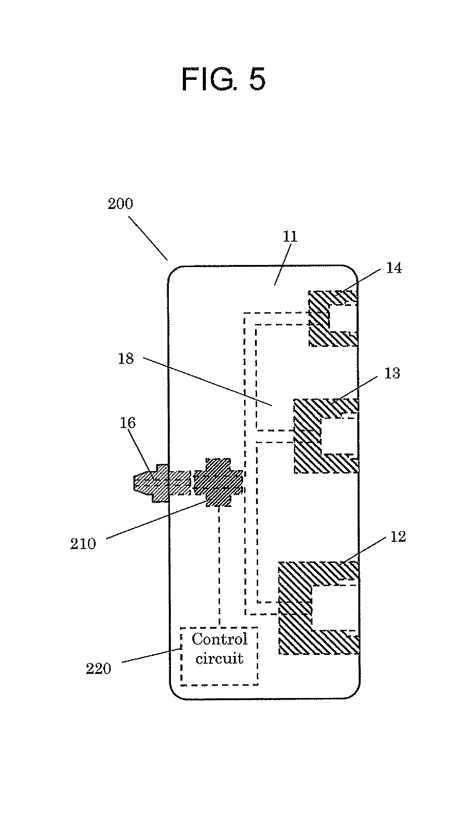

Fig. 5 is a schematic perspective view for describing the structure of the fuel supply adaptor device in the third embodiment of the present invention. In Fig. 5, the fuel cartridge and apparatus are same as in the first embodiment, and the illustration is omitted. Also, the same component elements as in Fig. 1 are given same reference numerals, and the description is sometimes omitted.

As shown in Fig. 5, fuel supply adaptor device 200 in this preferred embodiment is different from the first embodiment in that a part of connecting pipe 18 is provided with a pressure adjusting device.

That is, as shown in Fig. 5, fuel supply adaptor device 200 of the third embodiment of the present invention comprises a plurality of first connectors 12, 13, 14, second connector 16, and connecting pipe 18 for connecting the first connectors to the second connector, which are integrally built in holder 11, pressure adjusting device 210 disposed in a part of connecting pipe 18, and control circuit 220 for controlling the pressure adjusting device. In this case, for example, a solenoid valve or the like can be used as pressure adjusting device 210. When the pressure adjusting device is a mechanically adjusting mechanism, there is no particular need of disposing a control circuit.

And, when a pressure type fuel cartridge is used, pressure adjusting device 210 serves to supply the fuel under optimum conditions to the tank of the power generator of the apparatus into which the fuel is injected, for example, reducing the fuel pressure to a desired pressure.

According to the present preferred embodiment, in pressure type fuel cartridge, a plurality of fuel cartridges different in pressure are installed in the fuel supply adaptor device, and the fuel can be efficiently fed at an appropriate pressure suited for the apparatus. As a result, it is possible to realize a highly reliable fuel supply adaptor device free from leakage trouble.

In this preferred embodiment, the pressure adjusting device is disposed in the position after engagement of the connecting pipe connected to the second connector, as an example in the above description, but the configuration is not limited to this. For example, it is allowable to individually dispose pressure adjusting devices so as to individually adjust the pressures applied to first connectors 12, 13, 14 connected to individual fuel cartridges. In this way, with respect to a plurality of fuel cartridges of pressure type which are different in internal pressure, it is possible to prevent back flowing of the fuel caused due to pressure difference.

### Fourth embodiment

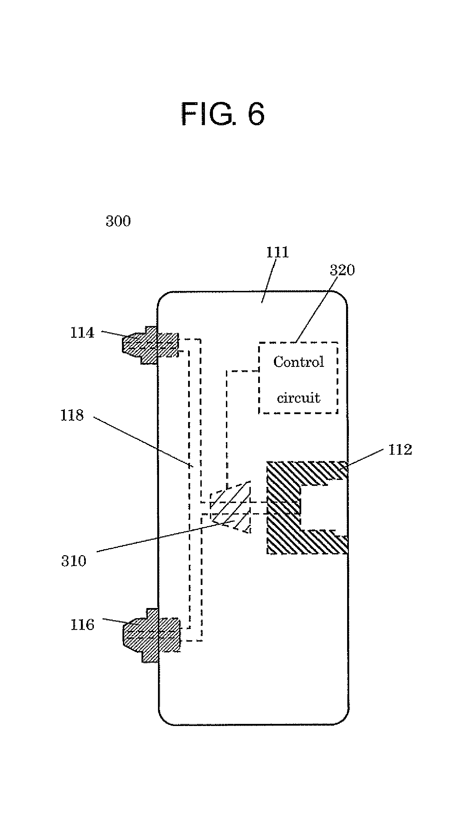

Fig. 6 is is a schematic perspective view for describing the structure of the fuel supply adaptor device in the fourth embodiment of the present invention. In Fig. 6, the fuel cartridge and apparatus are same as in the second embodiment, and the illustration is omitted. Also, the same component elements as in Fig. 3 are given same reference numerals, and the description is sometimes omitted.

As shown in Fig. 6, fuel supply adaptor device 300 in this preferred embodiment is different from the second embodiment in that a part of connecting pipe 18 is provided with a pressure generating device.

That is, as shown in Fig. 6, fuel supply adaptor device 300 in the fourth embodiment of the present invention comprises first connector 112, a plurality of second connectors 114, 116, and connecting pipe 118 for connecting the first connector to the second connectors, which are integrally built in holder 111, pressure generating device 310 disposed in a part of connecting pipe 118, and control circuit 320 for controlling the pressure generating device. In this case, for example, a centrifugal pump, diaphragm pump, syringe pump or the like can be used as pressure generating device 310.

And, when a non-pressure type fuel cartridge is used, pressure generating device 310 serves to supply the fuel to the tank of the power generator of the apparatus into which the fuel is injected, increasing the fuel pressure to a desired pressure.

According to the present preferred embodiment, in non-pressure type fuel cartridge, a fuel cartridge is installed in the fuel supply adaptor device, and the fuel can be efficiently fed at an appropriate pressure suited for the apparatus. As a result, it is possible to realize a highly reliable fuel supply adaptor device free from leakage trouble without lowering of the function at the power generator of the apparatus.

In this preferred embodiment, the pressure generating device is disposed between first connector 112 and the branch of the connecting pipe connected to the first connector as described as an example, but the configuration is not limited to this. For example, it is allowable to individually dispose pressure generating devices so as to individually generate pressures applied to second connectors 114, 116 connected to individual apparatuses. In this way, the fuel can be individually fed at optimum pressures to a plurality of apparatuses.

In the third embodiment, a pressure adjusting device is installed in the fuel supply adaptor device of the first embodiment, and in the fourth embodiment, a pressure generating device is installed in the fuel supply adaptor device of the second embodiment, respectively described as examples, but the configurations are not limited to these, and compatible with each other. Also, the pressure adjusting device and pressure generating device are individually disposed, as an example in the description, but it is allowable to install both devices in the fuel supply adaptor device. In this way, irrespective of pressure type and non-pressure type, it is possible to use optional fuel cartridges being identical in type and concentration of the fuel.

### Fifth embodiment

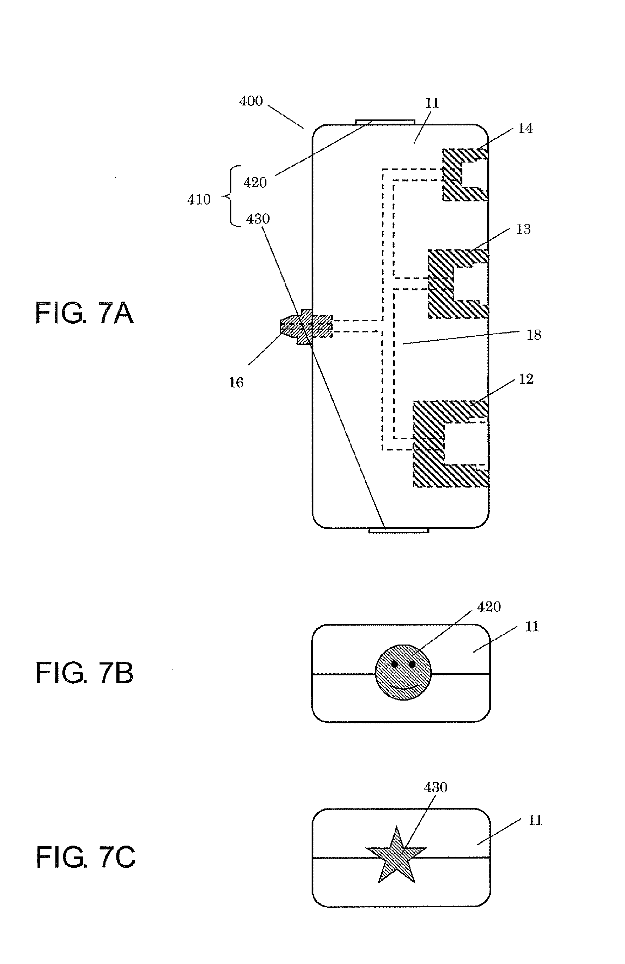

The structure of the fuel supply adaptor device in the fifth embodiment of the present invention will be described in the following with reference to Fig. 7A to Fig. 7C.

Fig. 7A is a schematic perspective view for describing the structure of the fuel supply adaptor device in the fifth embodiment of the present invention. Fig. 7B is a side view in one longitudinal direction of Fig. 7A, and Fig. 7C is a side view in the other longitudinal direction of Fig. 7A. In Fig. 7A to Fig. 7C, the fuel cartridge and apparatus are same as in the first embodiment, and the illustration is omitted. Also, same component elements as in Fig. 1 are given same reference numerals, and the description is sometimes omitted.

As shown in Fig. 7B and Fig. 7C, fuel supply adaptor device 400 of this preferred embodiment is different from the first embodiment in that a remodeling checking portion is disposed at the outer periphery of holder 11 as a remodeling preventing portion. The other configuration is same as in the first embodiment, and the description is omitted.

That is, as shown in Fig. 7A, fuel supply adaptor device 400 in the fifth embodiment of the present invention comprises a plurality of first connectors 12, 13, 14, second connector 16, and connecting pipe 18 for connecting the first connectors to the second connector, which are integrally built in holder 11, and remodeling checking portion 410 mounted on the engagement portion at the outer periphery of holder 11. Here, as remodeling preventive portion 410, for example, it can be formed by affixing hologram seal 420 as shown in Fig. 7B or by fine laser print 430 printed on the surface of holder 11 with use of fine laser as shown in Fig. 7C.

According to the present preferred embodiment, remodeling or imitation of the fuel supply adaptor device can be prevented by the remodeling checking portion. As a result, supplying of different fuel to the apparatus by remodeling such as replacement of the first connector or second connector can be avoided, and it is possible to realize an excellent fuel supply adaptor device which assures reliability and safety.

In the preferred embodiment, both of hologram seal 420 and fine laser print 430 are formed at the outer periphery of holder 11, as an example in the description, but the configuration is not limited to this, and it is allowable to separately dispose them.

### Sixth embodiment

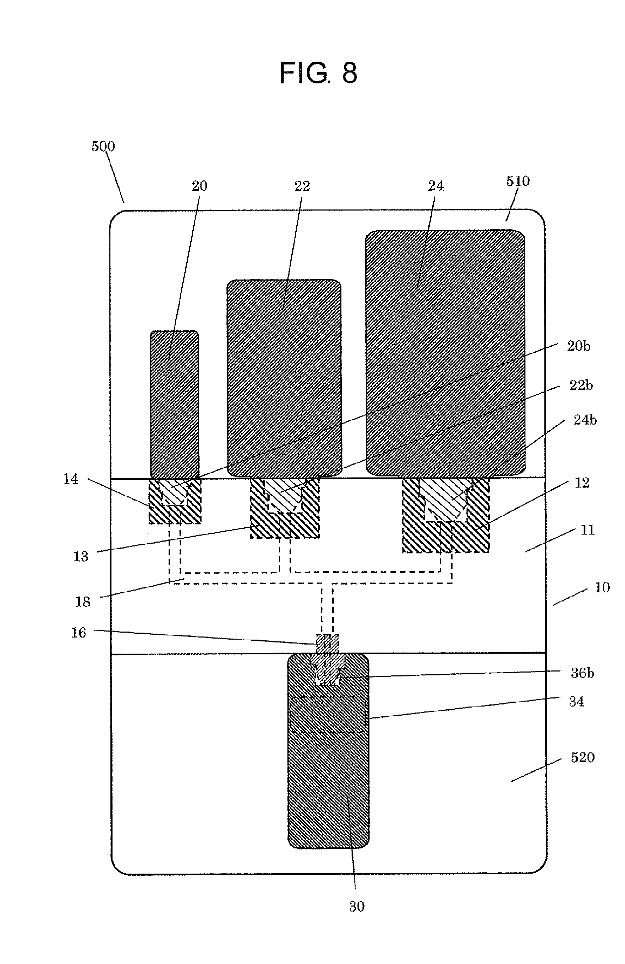

Fig. 8 is a schematic perspective view for describing the structure of the fuel supply adaptor device in the sixth embodiment of the present invention. In Fig. 8, same as in the first embodiment, a plurality of fuel cartridges 20, 22, 24 and apparatus 30 such as portable telephone are connected to fuel supply adaptor device 10, as an example in the description.

As shown in Fig. 8, fuel supply device 500 comprises cartridge holder 510 for holding a plurality of fuel cartridges and apparatus holder 520 for holding apparatus 30 which are integrally installed in holder 11 of fuel supply adaptor device 10. And, fuel supply adaptor device 10 comprises a plurality of first connectors 12, 13, 14, second connector 16, and connecting pipe 18 for connecting the first connectors to the second connector, which are integrally built in holder 11. Further, there are provided grooves (not shown) corresponding to the shapes of the plurality of fuel cartridges installed in cartridge holder 510, and the fuel cartridges can be easily connected to first connectors 12, 13, 14 by sliding them along the grooves. Also, same as described above, apparatus holder 520 is also provided with a groove (not shown) corresponding to the shape of apparatus 30 and can be easily connected to second connector 16 by sliding the apparatus along the groove. The configurations of the fuel cartridge and apparatus are same as in the first embodiment, and the description is omitted.

And, fuel supply device 500 is configured in that fuel injecting portion 36 of apparatus 30 held in apparatus holder 520 is connected to second connector 16, and fuel supplying portions 20b, 22b, 24b of a plurality of fuel cartridges 20, 22, 24 held in cartridge holder 510 are connected to first connector 12, and the fuel in the fuel cartridge is fed to power generator 34 of apparatus 30 through connecting pipe 18.

According to the present preferred embodiment, fuel cartridges 20, 22, 24 and apparatus 30 are reliably held and can be easily installed. Further, the fuel of fuel cartridges can be efficiently fed to apparatus 30 via fuel supply adaptor device 10.

Also, the fuel injecting portion of the apparatus reduced in size can be connected to the second connector for example by sliding via the groove nearly same in shape as the apparatus in the apparatus holder, and therefore, it is possible to effectively prevent damage of the second connector due to accidental pressures or deforming when connected. Similarly, the cartridge holder which holds a plurality of cartridges different in shape may serve to prevent the fuel supplying portion and the first connector from being damaged or the like.

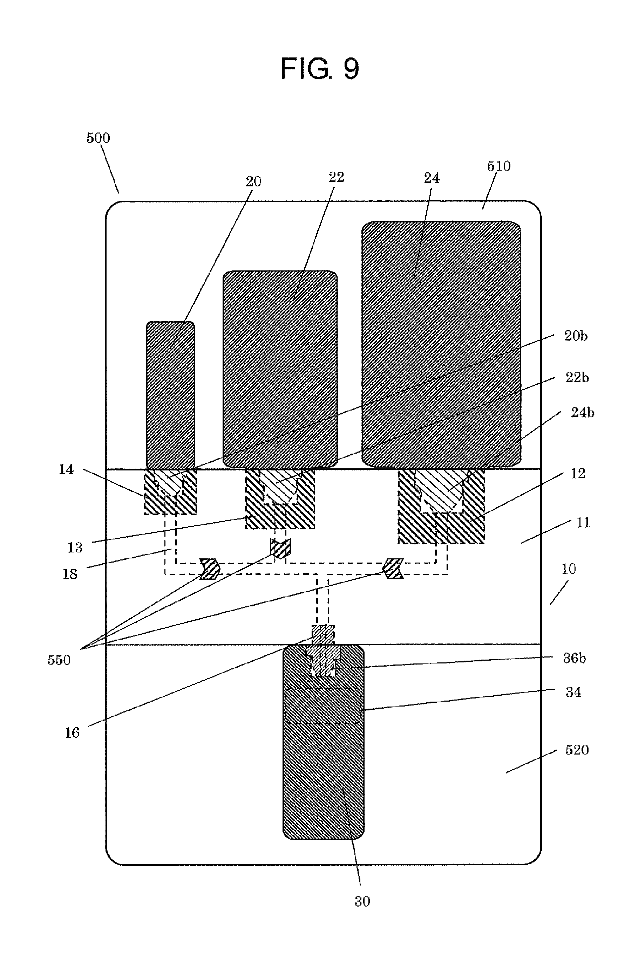

In the present preferred embodiment, the first connector and the second connector are connected to each other just by using a connecting pipe, as an example in the description, but the configuration is not limited to this. For example, as in another example of the fuel supply adaptor device shown in Fig. 9, it is allowable to dispose individual one-way valve 550 in the connecting pipe connected to each first connector. In this way, when the internal pressures of individual fuel cartridges are different, back flowing of the fuel from each other can be prevented. Here, the above configuration can be applied to each of the above preferred embodiments.

In each of the above preferred embodiments, liquid fuel is used as an example in the description, but the configuration is not limited to this. For example, gaseous fuel such as butane and hydrogen can be applied.

### INDUSTRIAL APPLICABILITY

With use of the fuel supply adaptor device of the present invention, the connection to a plurality of fuel cartridges or a plurality of apparatuses can be easily made. Accordingly, making the connection of a plurality of fuel cartridges or a plurality of apparatuses, it is effective to improve the fuel supply workability and to reduce the fuel running cost.

## Claims

1. A fuel supply adaptor device which connects an apparatus having a
fuel injecting portion including at least a part of a power generator formed of fuel cells to a fuel cartridge having a fuel supplying portion in order to deliver fuel in the fuel cartridge to the power generator, comprising:
at least one first connector for making connection to the fuel injecting portion of the apparatus,
at least one second connector for making connection to the fuel
supplying portion of the fuel cartridge,
a connecting pipe for connecting the first connector to the second
connector, and
a holder,
wherein the first connector, the second connector, and the connecting pipe are held by the holder.

2. The fuel supply adaptor device of claim 1, comprising a plurality of
the second connectors whose shape corresponds to each of the fuel supplying portions different in shape of a plurality of the fuel cartridges identical in fuel type and concentration and different in capacity.

3. The fuel supply adaptor device of claim 1 or claim 2, comprising a plurality of first connectors whose shape corresponds to each of the plurality of the apparatuses different or identical in shape of the fuel injecting portion.

4. The fuel supply adaptor device of claim 1, comprising a pair of mechanical keys capable of connection between the first connector and the fuel injecting portion corresponding thereto and between the second connector and the fuel injecting portion corresponding thereto.

5. The fuel supply adaptor device of claim 1, wherein the fuel cartridge is a pressure type, and the connecting pipe is provided with a pressure adjusting device for adjusting pressures of the fuel fed to the fuel injecting portion of the apparatus.

6. The fuel supply adaptor device of claim 1, wherein the fuel cartridge is a non-pressure type, and the connecting pipe is provided with a pressure generating device for pressurizing the fuel fed to the fuel injecting portion of the apparatus.

7. The fuel supply adaptor device of claim 1, wherein the holder is provided with a remodeling preventive portion.

8. The fuel supply adaptor device of claim 7, wherein as the remodeling preventive portion, the first connector, the second connector, and the connecting pipe are integrated by the holder formed by weld.

9. The fuel supply adaptor device of claim 7, wherein as the remodeling preventive portion, at least a part of the holder is provided with a remodeling checking portion.

10. The fuel supply adaptor device of claim 9, wherein the remodeling checking portion is formed by affixing a hologram seal or fine laser print.

11. A fuel supply device **characterized in that** the holder of the fuel supply adaptor device of claim 1 is provided with a cartridge holder for holding the fuel cartridge and an apparatus holder for holding the apparatus.
